# EUROPEAN PATENT APPLICATION

(11) **EP 4 675 302 A1**
(43) Date of publication of application: **07.01.2026**
(21) Application number: 24186570.8
(22) Date of filing: 04.07.2024
(51) Int. Cl.: G01S 5/02, G01S 5/04, G07C 9/00, B60R 25/24, G01S 5/14, G01S 11/02

(54) **METHODS AND SYSTEMS FOR DETERMINING A LOCATION OF A FIRST OBJECT RELATIVE TO A SECOND OBJECT**

(71) Applicant: Aptiv Technologies AG, 8200 Schaffhausen (CH)
(72) Inventor: ROMASZKO, Mateusz, 8200 Schaffhausen (CH); WRONKOWIC, Angelika, 8200 Schaffhausen (CH)
(74) Representative: Manitz Finsterwald Patent- und Rechtsanwaltspartnerschaft mbB

(57) **Abstract**

A computer implemented method for determining a location of a first object relative to a second object comprises the following steps carried out by computer hardware components: determining an estimate for the location of the first object relative to the second object; determining a reliability of the estimate; updating the estimate based on the reliability to obtain an updated estimate; and filtering the updated estimate using a velocity based filtration to obtain the location of the first object relative to the second object.

## Description

### FIELD

The present disclosure relates to methods and systems for determining a location of a first object relative to a second object.

### BACKGROUND

Determining a location of an object, in particular relative to another object, may be useful in various tasks. For example, when using a mobile phone as a key for a vehicle, it may be desired to determine whether the mobile phone is near the vehicle.

Accordingly, there is a need to efficiently and reliably determine the location of an object.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for determining a location of a first object relative to a second object, the method comprising the following steps performed (in other words: carried out) by computer hardware components: determining an estimate for the location of the first object relative to the second object; determining a reliability of the estimate; updating the estimate based on the reliability to obtain an updated estimate; and filtering the updated estimate using a velocity based filtration to obtain the location of the first object relative to the second object.

In other words, processing and correction of localization method results may be provided based on measurement reliability estimation and tuned filtering.

According to an embodiment, the computer implemented method further comprises the following steps carried out by the computer hardware components: acquiring signals using sensors; preprocessing the signals; providing the preprocessed signals as an input for determining the estimate of the location. The signals may include signals returned by UWB nodes working in a ranging mode, like for example distances (for example determined based on Time-of-Flight and speed of light), and/ or ranging statuses. Different statuses may mean valid or invalid measurement. Distances with invalid ranging statuses may be excluded from further analyses.

According to an embodiment, preprocessing comprises determining a validity of the signals.

According to an embodiment, determining a reliability of the estimate comprises assigning one of three reliability states. It has been found that assigning one of different reliability states provides for efficient and reliable processing.

According to an embodiment, determining a reliability of the estimate comprises determining a jump between a current and a delayed estimate. For example, if a difference between subsequent estimates is too large, processing may be different compared to a small change over time.

According to an embodiment, determining a reliability of the estimate comprises checking if an error is singular (for example, checking if an error only occurs once).

According to an embodiment, if it is determined that an error is singular, the error is considered as exception. In such a situation, for example, it may not be necessary to initiate error processing, but the estimate that was determined to be erroneous may just be ignored.

According to an embodiment, the velocity based filtration comprises movement detection. This may also include reliable processing at different relative speeds between the objects.

According to an embodiment, the velocity based filtration comprises determining a parameter for a low pass filter. The parameter may be referred to as alpha, which may a value of alpha parameter of the LPF filter tuned for moving object.

According to an embodiment, the velocity based filtration comprises applying the low pass filter to the updated estimate.

According to an embodiment, the location of the first object relative to the second object comprises a distance and/ or an angle relative to a reference direction (for example in a vehicle coordinate system).

According to an embodiment, the first object is a mobile phone and the second object is a vehicle.

According to an embodiment, the computer implemented method further comprises the following steps carried out by the computer hardware components: determining whether to give access to a vehicle based on the location of the first object relative to the second object.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein (in other words: the non-transitory computer readable medium may comprise instructions which, when executed by a computer system, make the computer system carry out several or all steps or aspects of the computer implemented method described herein). The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1A: an illustration of a localization method using ultra-wideband technology;
- Fig. 1B: an illustration of a localization method using ultra-wideband;
- Fig. 2: an illustration of a localization algorithm system according to various embodiments;
- Fig. 3: an illustration of the module for stage 1;
- Fig. 4: an illustration of the module for stage 2;
- Fig. 5: an illustration 500 of the module for stage A;
- Fig. 6: an illustration of calculation of time between algorithm triggering;
- Fig. 7: an illustration of the module for stage 3;
- Fig. 8: an illustration of the module for data preparation before filtration;
- Fig. 9: an illustration of determination of the reliability status;
- Fig. 10: an illustration of updating of the reliability status based on occurrence of ignored errors;
- Fig. 11: an illustration of correction of estimated X- and Y- positions based on reliability status;
- Fig. 12: an illustration of the module for velocity based filtration using LPF;
- Fig. 13A: an illustration of object position x, y, time between samples and the status of movement detection;
- Fig. 13B: a symbolic representation of a Bode plot;
- Fig. 14: an illustration of object position x and y;
- Fig. 15: an illustration of object position x and y and its velocity in time domain;
- Fig. 16: an illustration of object position x and y;
- Fig. 17: an illustration of object position x and y and its velocity in time domain;
- Fig. 18: an illustration of object position x and y;
- Fig. 19: an illustration of object position x and y and its velocity in time domain;
- Fig. 20: an illustration of object position x and y;
- Fig. 21: an illustration of object position x and y and a flag;
- Fig. 22: an illustration of object position x and y and its velocity in time domain, a reference GPS position and estimation from localization algorithm;
- Fig. 23: an illustration of an exemplary result of localization after the module for stage 2 and the module for stage 3;
- Fig. 24: a flow diagram illustrating a method for determining a location of a first object relative to a second object according to various embodiments; and

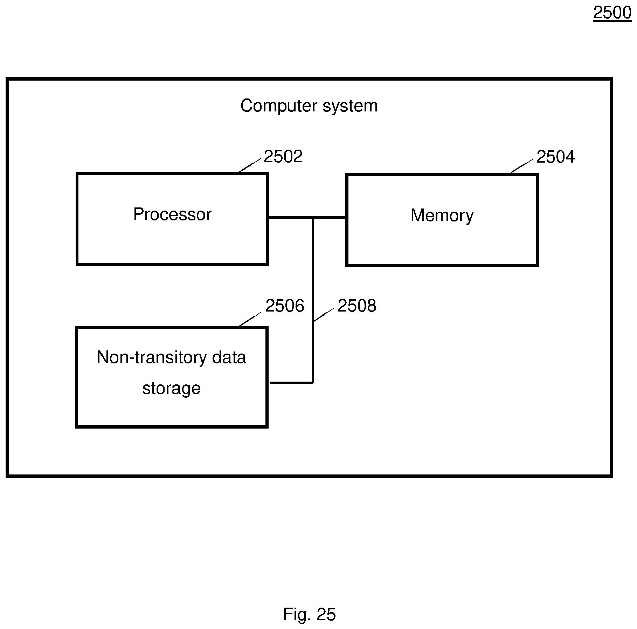

- Fig. 25: a computer system with a plurality of computer hardware components configured to carry out steps of a computer implemented method for determining a location of a first object relative to a second object according to various embodiments.

### DETAILED DESCRIPTION

Determining a location of an object, in particular relative to another object, may be useful in various tasks. For example, when using a mobile phone as a key for a vehicle, it may be desired to determine whether the mobile phone is near the vehicle.

Commonly used vehicle access may be based on LF (low frequency)-based localization, which may be based on measurement of a strength of field and checking the measured values against previously gathered data. This approach may be called "fingerprinting" approach. This approach may give rough information about the area where a localized device is located, but it is not detailed (for example does not provide any information related to whether the localized device is in front, on a side, or inside the vehicle).

With technologies like Bluetooth-based location (for example based on phase-based ranging, time of flight and angle of arrival) and Ultrawideband-based location (for example based on time of flight) it may be possible to get more accurate position information, for example with an accuracy of 10 cm or below.

In algorithms dedicated to solving position estimating problems, for example, linear least squares or kernel-based methods may be used. However, these methods still don't provide sufficient accuracy.

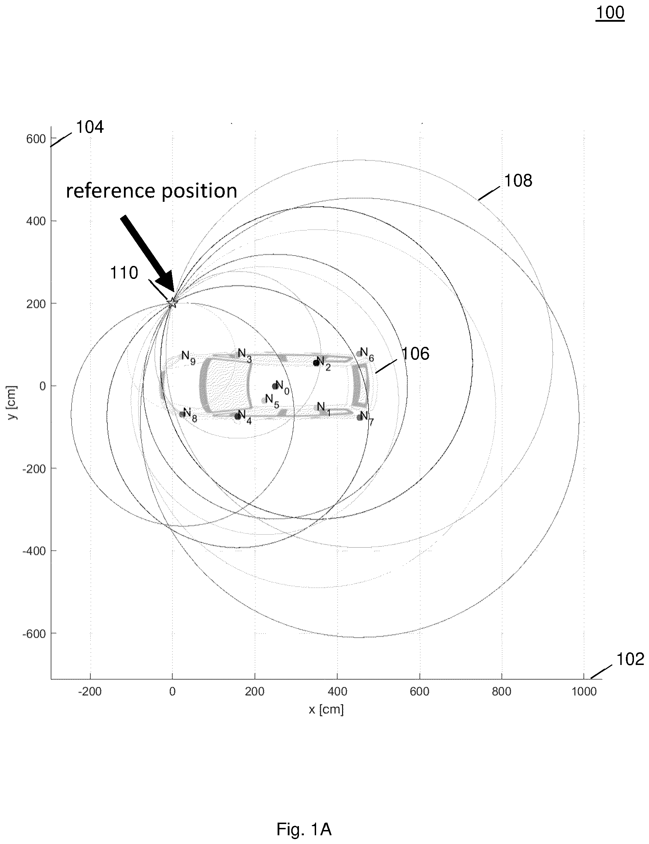

Fig 1A shows an illustration 100 of a localization method using UWB (ultra-wideband) technology. A horizontal axis 102 represents an x position, and a vertical axis 104 represent a y position. A position (x,y), which may be referred to as a reference position 110, of an object may be to be determined. For example, the reference position 110 may be determined relative to a vehicle 106. Various UWB nodes N₀, ..., N₉ may be provided on the vehicle 106. Each UWB node may receive a signal from an object located at the reference position 110. The UWB nodes may measure time, corresponding to distance. Thus, a distance between the object located at the reference position 110 and the respective UWB node may be determined based on the received signal. Accordingly, for each UWB node, a circle around the receive with a radius which is based on the received signal, may be determined, and the circle may represent potential boundary of locations of the object. One of these circles is denoted by 108 in Fig. 1A. In an ideal scenario, the respective circles corresponding to each of the UWB nodes intersect in one point (and one point only), and this point is the reference point 110.

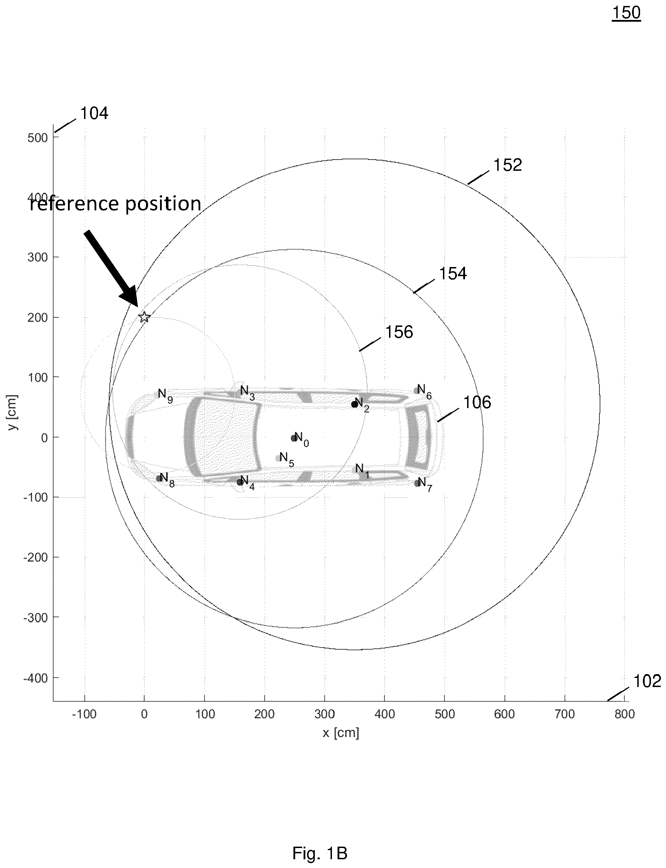

Fig. 1B shows an illustration 150 of a localization method using UWB (ultra-wideband). Various items shown in Fig. 1B are similar or identical to items shown in Fig. 1A, and duplicate description may be omitted. In a real-world scenario, which may be non-ideal, the respective circles corresponding to each of the UWB nodes (for example circles 152, 154, and 156) do not intersect in a single point.

Localization may face challenges, for example related to absorption (missing measurements), reflections (larger measurements), and related to determination of a height (for example corresponding to a z axis), and may be desired to work fast on embedded systems.

According to various embodiments, methods and systems are provided to efficiently and reliably determine the location of an object. According to various embodiments, systems and methods are provided which may provide accurate results even with data containing inaccuracies.

According to various embodiments, analysis of results (for example related to estimated x, y, z coordinates of the object) in the time domain may be provided. Using information about the elapsed time may allow reacting appropriately to a possible loss of range, communication, etc. Information about the elapsed time may further allow to verify errors determined by the localization algorithm itself based on an object movement model.

According to various embodiments, systems and methods based on a localization method and accompanying steps for the analysis of results in the time domain and their correction may be provided.

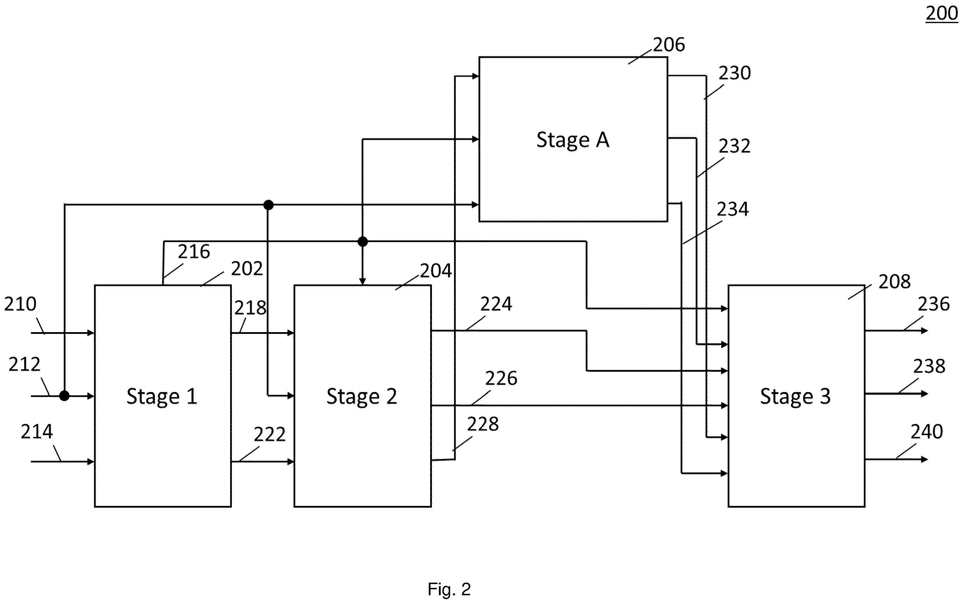

Fig. 2 shows an illustration 200 of a localization algorithm system according to various embodiments. The Localization Algorithm System (LAS) shown in Figure 1 may include modules for the following stages:
- a module 202 for stage 1 of the localization algorithm: pre-processing,
- a module 204 for stage 2 of the localization algorithm: main part of the localization algorithm,
- a module 206 for stage A of the localization algorithm: checking time and connection, and
- a module 208 for stage 3 of the localization algorithm: post processing.

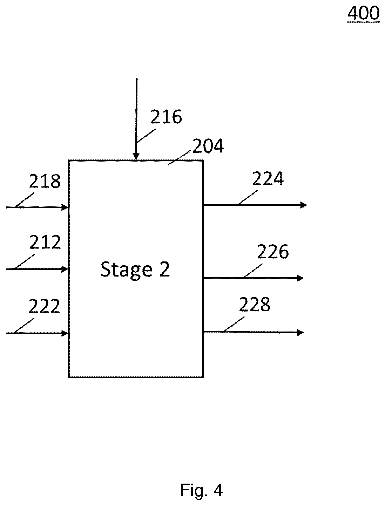

The module 204 for stage 2 includes a localization algorithm. Any localization algorithm may be used provided that its output variables include the location estimates (estimate 224 for x coordinate from stage 2, estimate 226 estimate for y coordinate from stage 2) and the estimation status (estimation status 228 from stage 2) (as also illustrated in Fig. 4). The estimation status 228 from stage 2 may give information whether the location estimation could or could not be carried out in the module 204 for stage 2 (depending on input data or working of applied localization algorithm itself).

The module 202 for stage 1 of the LAS may include preparation of signals before further execution of the algorithm (wherein the position estimation may be the result of the module 204 for stage 2). This may involve checking a validity of measurements returned by sensors, calibration of the measured distances and preparation of a trigger to run the Localization Algorithm (LA) when new measurement is received.

The module 204 for stage 2 may include a core part of the LAS, for example mathematical computations and other operations after which the estimated position of the object is returned. The object position may be calculated based on signals values of a current measurement, which may be analyzed independently from signal samples of previous measurements. It will be understood that the module 204 for stage 2 may contain any localization method, provided that the required inputs (for example distances, timestamp, ranging statuses) and outputs (for example estimate 224 for x coordinate from stage 2, estimate 226 for y coordinate from stage 2, the estimation status 228 from stage 2) are retained.

The module 206 for stage A may be related to checking time and connection, and to setting an estimation status 230 from stage A. The module 206 for stage A may be related to the analysis of signals based on elapsed time in order to detect loss of connection, (detect) re-initialization of the LAS after lost connection and retrieve information about real time length between the measurements and algorithm triggering, which may be desired for calculations in the module 208 for stage 3.

The module 208 for stage 3 may be related to post processing, for example the analysis of measurement reliability (based on statuses of measurements validity and distances between estimated object positions analyzed in time domain; in other words to answering the question: "Can we trust the result?")), and filtering tuned based on a movement detection model. The aim of the measurement reliability estimation may be to return the object position when there is trust to the result, hold on the position if current measurement is assessed unreliable, or ignore the position if it is unreliable and previous position cannot be held on due to exceeded allowable time duration elapsed from last reliable result. The (tuned) filtering (of the object's position) may be performed with tuned parameters depending on whether the object is detected (using a velocity-based model; based on movement detection model) as in movement or at rest in order to obtain more stable positioning over time.

The ranging statuses 210 returned by each UWB node (for example of type uint8), timestamp 212 returned by UWB system, and distances 214 returned by each UWB node may be provided as inputs to the module 202 for stage 1.

The module 202 for stage 1 may provide ranging statuses 218 returned by each UWB node (which may be of type logical, and which may be a flag indicating whether the node succeeded in measuring the distance), distances 222 returned by each USB node after calibration, and a flag 216 indicating whether the localization algorithm is to be triggered (which may occur at its falling and rising edges) as outputs.

Ranging statuses 218, timestamp 212 returned by UWB system, distances 222 returned by each USB node after calibration, and the flag 216 indicating whether the localization algorithm is to be triggered may be provided as inputs to the module 204 for stage 2.

The module 204 for stage 2 may provide estimate 224 for x coordinate from stage 2, estimate 226 for y coordinate from stage 2, and the estimation status 228 from stage 2 as outputs.

The estimation status 228 from stage 2, the flag 216 indicating whether the localization algorithm is to be triggered, and timestamp 212 may be provided as inputs to the module 206 for stage A.

The module 206 for stage A may provide estimation status 230 from stage A, elapsing time 232 during no triggering of the localization algorithm, and a flag 234 indicating whether the estimate 224 for x coordinate and the estimate 226 for y coordinate are valid (for example based on the estimation status 228 from stage 2) as outputs.

The flag 216 indicating whether the localization algorithm is to be triggered, estimate 224 for x coordinate from stage 2, estimate 226 for y coordinate from stage 2, estimation status 230 from stage A, elapsing time 232 during no triggering of the localization algorithm, and the flag 234 indicating whether the estimate 224 for x coordinate and the estimate 226 for y coordinate are valid may be provided as inputs to the module 208 for stage 3.

The module 208 for stage 3 may provide a final estimate 236 for x coordinate, a final estimate 238 for y coordinate, and a final estimation status 240 as outputs.

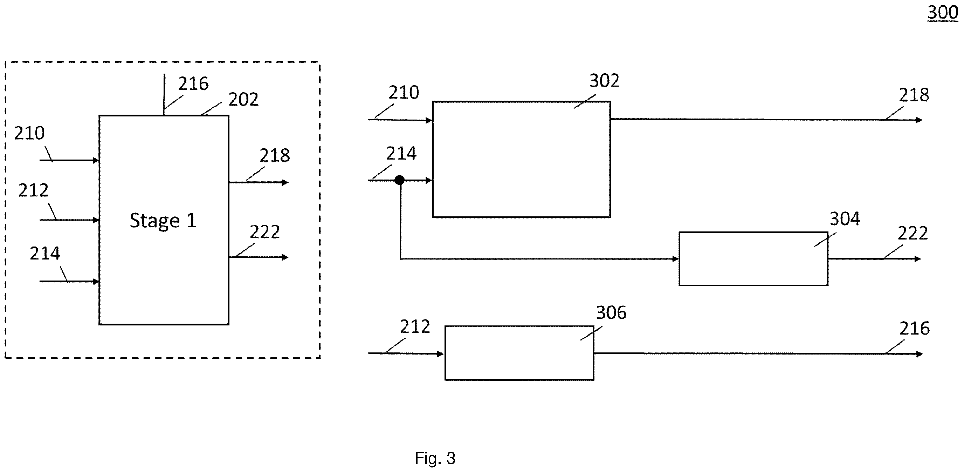

Fig. 3 shows an illustration 300 of the module 202 for stage 1. The module 202 for stage 1 may include a module 302 for ranging status logical value determination, a module 304 for distance calibration, and a module 306 for determination of trigger for localization algorithm.

The module 302 for ranging status logical value determination may determine the final ranging statuses 218 based on input ranging statuses 210 returned by nodes installed in the system. In the system, several nodes may be installed in the car and during each measurement each node may return a ranging status, which may give information whether the node received the signal sent by transmitter (and the distance between the node and the object was assessed) or something went wrong, for example the receiver was out of range, for example the signal was absorbed on its way (and the distance was not determined).

The final ranging statuses 218 may give information about validity of measurement returned by each sensor, wherein distances 214 returned by each UWB node for invalid measurements are ignored in the next steps of algorithm. The nodes may also be called anchors or antennas.

The module 304 for distance calibration may return calibrated distances 222 returned by each USB node after calibration (for example based on subtracting offsets from distances 214 measured by sensors).

The module 306 for determination of trigger for localization algorithm may determine as output the flag 216 which may be used to trigger (for example at its falling and rising edges) the localization algorithm. The triggering may occur each time the input timestamp 212 changes, i.e. when new data is returned by sensors.

Between the moments of time of returning new data by sensors, the object position may also be estimated based on the analysis of results in the time domain performed in the module 206 for stage A and filtration performed in the module 208 for stage 3. In other words, the estimates being the output of the system may be returned more often than the distances are returned by sensors.

The timestamp 212 may be an identifier indirectly connected with time of returning data by the nodes.

Fig. 4 shows an illustration 400 of the module 204 for stage 2. Various items shown in Fig. 4 are similar or identical to items shown in Fig. 2, and duplicate description may be omitted. The module 204 for stage 2 may cover a localization algorithm. The localization algorithm may be any algorithm dedicated to position estimation provided that it uses distances, ranging statuses and timestamp as inputs and returns an estimated position and estimation status. The localization algorithm may output an estimated position on an x axis (estimate 224), and/or an estimated position on a y axis (estimate 226), and/or an estimated position in a z axis (not shown in Fig. 4), and/or an estimation status (estimation status 228 from stage 2).

The value of the estimation status 228 from stage 2 may be a status of the position estimation, for instance 0 when the position was possible to be estimated. Other values of the estimation status 228 from stage 2 may mean that the position cannot be estimated or the calculated result is fraught with too much uncertainty. This may occur in the following situations:
- the first run (algorithm initialization);
- not enough number of sensors returned valid measurements.

There may be different possible estimation statuses depending on the applied method for the localization algorithm in the module 204 for stage 2.

In such situations the estimated position (or assigned zeros to X-Y position when the position cannot be mathematically determined) may be ignored.

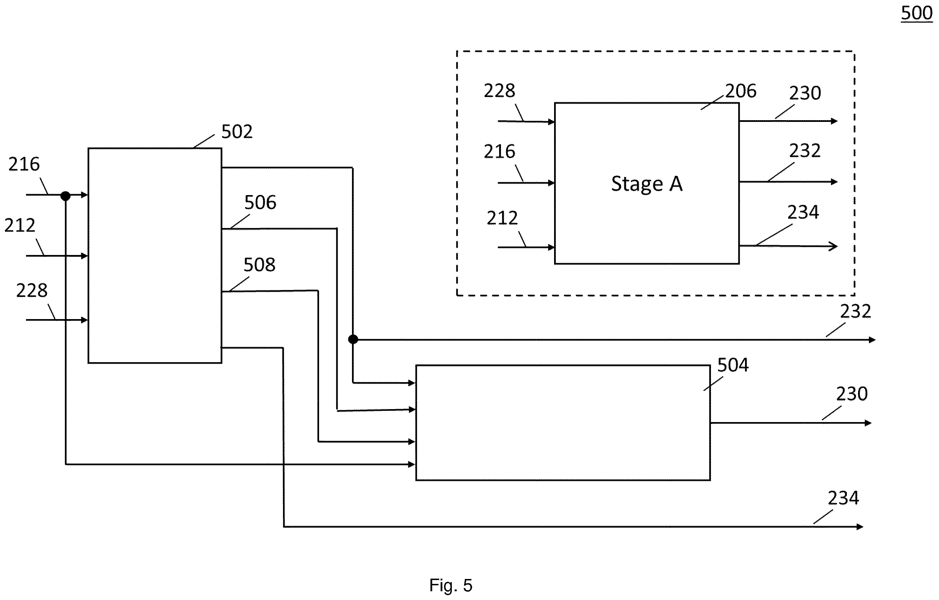

Fig. 5 shows an illustration 500 of the module 206 for stage A. Various items shown in Fig. 5 are similar or identical to items shown in Fig. 2, and duplicate description may be omitted. In the module 206 for stage A the real time elapsing during working of the system is estimated since in the presented system it is not provided as the input. The elapsing time may be estimated based on counting sampling ticks of the algorithm and multiplying them by the applied sampling period set on the embedded platform at which the algorithm is run. This step may be omitted and substituted by introducing additional input when the information about real time can be provided by an external application.

The module 206 for stage A (which may include a module 502 for analysis of time between localization algorithm triggering and a module 504 for assignment of estimation status 230 from stage A) may be an intermediate module between the module 204 for stage 2 and the module 208 for stage 3, in which signal analysis based on elapsed time and estimation statuses (estimation status 228 from stage 2) may be performed. In the module 206 for stage A, the analysis of estimated positions may not directly be considered (this may be reserved for the module 208 for stage 3). The module 206 for stage A may provide outputs: elapsing time 232 during no triggering of the localization algorithm, estimation status 230 from stage A, and the flag 234 indicating whether the estimate 224 for x coordinate and the estimate 226 for y coordinate are valid.

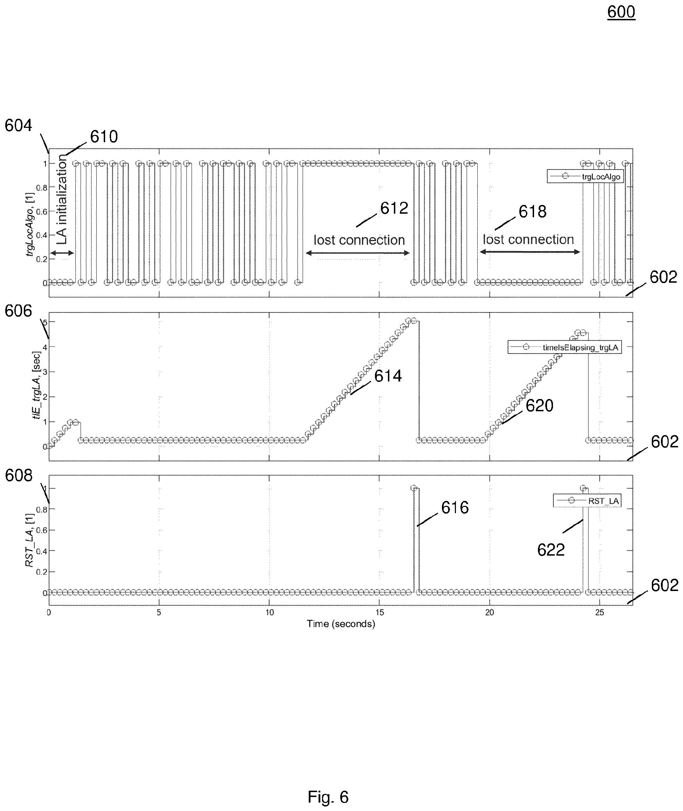

The output elapsing time 232 during no triggering of the localization algorithm may be a calculated elapsing time during no triggering of the Localization Algorithm (based on the flag 216 indicating whether the localization algorithm is to be triggered), for example elapsed time counted incrementally and reset on each triggering of the algorithm (as illustrated in Fig. 6). Having this information may allow for detection of a lack of communication and calculation of a velocity of the object (for example based on distance between estimated positions and time between them). The output elapsing time 232 during no triggering of the localization algorithm may be used to detect lost connection, calculate object's velocity, and enable a short-time history-based position estimation.

The output flag 234 indicating whether the estimate 224 for x coordinate and the estimate 226 for y coordinate are valid may be a Boolean status of validity of the estimated position, for example based on the output status from the module 204 for stage 2 (estimation status 228 from stage 2). The position may be assigned as invalid if the estimation status 228 from stage 2 returns at least one of statuses assigned as invalid position estimation, as described above.

The output estimation status 230 from stage A may be an additional estimation status (which may not be connected with the estimation status 228 from stage 2) based on analysis of signals in the time domain. Appropriate status, which may be further used to ignore the localization result, may be assigned for example in the following three situations:
- signal samples during initialization of the Localization Algorithm and waiting for first proper result (flag 508 indicating whether the localization algorithm is initiated and waiting); in other words: the state indicated by flag 508 indicating whether the localization algorithm is initiated and waiting may be finished after fulfillment of the following conditions: wait for second LA triggering, then wait for the first result with positive status of the flag 234 indicating whether the estimate 224 for x coordinate and the estimate 226 for y coordinate are valid;
- when time without algorithm triggering (elapsing time 232 during no triggering of the localization algorithm) exceeds a predefined period of time (for example in the module 208 for stage 3, during the lack of communication with UWB nodes, the position may be estimated based on a history of previous estimated positions but only within a very short time elapsed from last triggering; after that period the history-based estimated position may be ignored);
- when a flag 506 indicating whether the localization algorithm is to be reset occurs (as illustrated in Fig. 6); it may be set during the re-initialization of the algorithm, i.e. for each first sample of triggered algorithm after lost connection (for example when there is too much elapsed time without LA triggering)).

The output estimation status 230 from stage A may provide a validity status based on time (for example related to LA initialization and/ or lost connection and/ or re-initialization).

Fig. 6 shows an illustration 600 of calculation of time between algorithm triggering. Horizontal axes 602 denote time in seconds, and a vertical axis 604 denotes the flag 216 (which is labelled trgLocAlgo in Fig. 6) indicating whether the localization algorithm is to be triggered, a vertical axis 606 denotes elapsing time 232 (which is labelled tiE_trgLA (timelsElapsing_trgLA in Fig. 6) during no triggering of the localization algorithm in seconds, and a vertical axis 608 denotes the flag 506 (which is denoted RST_LA in Fig. 6) indicating whether the localization algorithm is to be reset. LA initialization 610 is illustrated. Lost connection 612 may occur, as indicated by the flag 216 indicating whether the localization algorithm is to be triggered, and during the lost connection, the value of elapsing time 232 during no triggering of the localization algorithm may increase (614), until the flag 506 indicating whether the localization algorithm is to be reset is set to value 1 (616). A further lost connection 618 with corresponding increase 620 of elapsing time 232 during no triggering of the localization algorithm and switch 622 to value of 1 of the flag 506 indicating whether the localization algorithm is to be reset are illustrated.

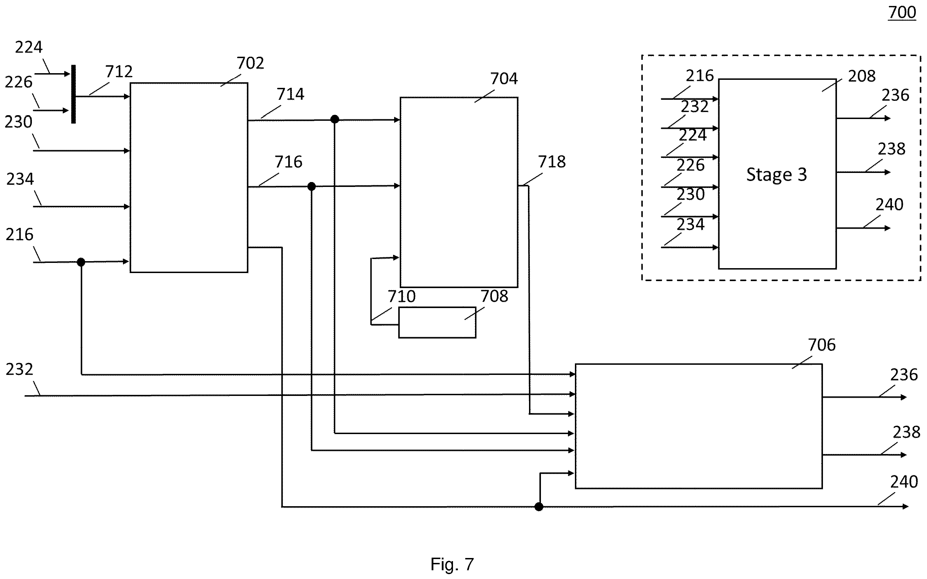

Fig. 7 shows an illustration 700 of the module 208 for stage 3. The module 208 for stage 3 may include post-processing of the estimated positions based on assessment of reliability of the results, movement detection and velocity-based filtration of the estimated X-Y positions. The module 208 for stage 3 may include processing carried out by the following three modules, which will be explained in the following:
- module 702 for data preparation before filtration,
- module 704 for initial filtration using LPF (low pass filter), and
- module 706 for velocity based filtration using LPF.

The vector 718 with estimates 714 after initial filtering is a two-dimensional array of the estimated X-Y position after initial filtering performed in the module 704 for initial filtration using LPF. The final estimated X-Y position after filtration performed in the module 706 for velocity based filtration using LPF is the signal split to two outputs: final estimate 236 for x coordinate and final estimate 238 for y coordinate.

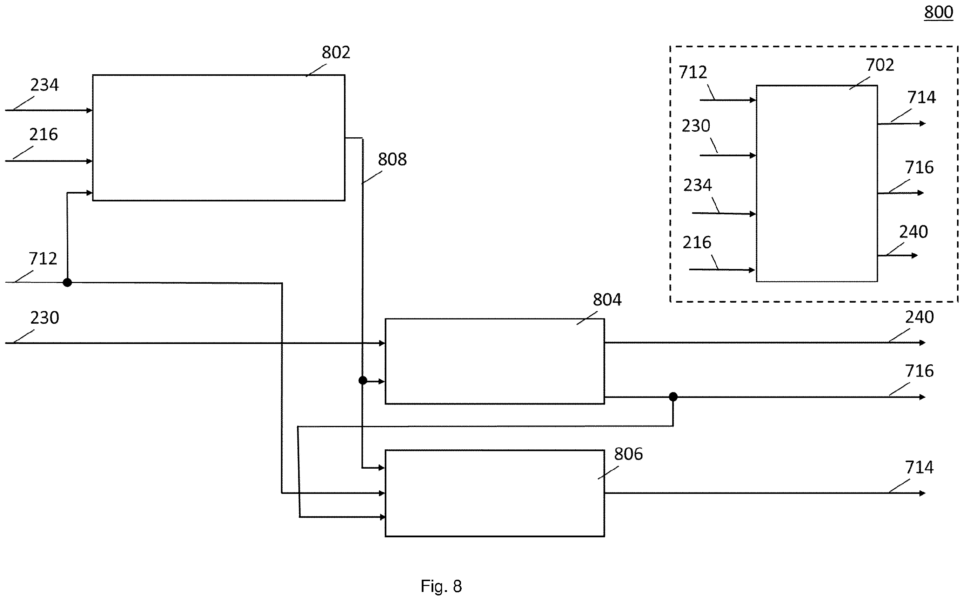

Fig. 8 shows an illustration 800 of the module 702 for data preparation before filtration, which may be related to data preparation before filtering. The module 702 for data preparation before filtration may provide initial correction of the X-Y position (being the output from the module 204 for stage 2) of the localized object, for example holding on a previous localization result when current result is estimated as unreliable or when object "jumping" is detected. "Object jumping" may be a situation when estimated position is improbable with respect to previous reliable position taking into account a maximal predicted velocity of a human movement (for example assumed to be 4 m/s). Additionally, appropriate status (flag 716 indicating whether the LPF filter is to be reset) may be set when the filter must be reset in the next steps. In this step, a final estimation status 240 may be determined. The processing of the module may be divided into following substeps.

A first (sub-)module 802 for assessment of the estimates reliability may assess reliability of the estimated object position. The first submodule may determine if the estimated object position is reliable (for example based on flag 234 indicating whether the estimate 224 for x coordinate and the estimate 226 for y coordinate are valid and detection of jumping between a current and a delayed sample).

The determination of the reliability may allow minimization of the occurrence of errors in the localization. When the estimation status repetitively indicates invalid result or the position is jumping, the algorithm may hold on a last valid position and may wait for a predefined time period for a stable result to gain trust. However, a single jump or single invalid status may be considered an exception and its sporadic occurrence may not result in resetting time counted to gain the trust to the result.

One of three statuses (0, 1, or 2) may be set to the status 808 indicating reliability of the vector with estimates 712 as follows
- output value of 2 of status 808 indicating reliability of the vector with estimates 712 may indicate that the result is reliable (for example, trust to the result has been gained; the calculated position is OK and will be returned; the output with a final estimation status 240 may be set to 0, which may mean that the calculated position is OK and will be returned);
- output value of 1 of status 808 indicating reliability of the vector with estimates 712 may indicate that the result is unreliable, but that it is desired to hold on to the result (for example, there is no trust to the result but it occurs within a very short time period (which may be a predefined parameter) right after a reliable result; the final estimation status 240 may be set to 0, i.e. the result may be returned, but the previous (reliable) position may hold on instead of returning the calculated position);
- output value of 0 of status 808 indicating reliability of the vector with estimates 712 may indicate that the result is unreliable (for example, there is no trust to the result and time elapsed from last reliable result exceeds the predefined time period (which allows for holding the last position on); the output final estimation status 240 may be set to 1, i.e. the result is to be ignored.

Gaining the trust may take place through waiting for a predefined period of time of receiving positioning results with both conditions met: proper estimation status(es) (based on the flag 234 indicating whether the estimate 224 for x coordinate and the estimate 226 for y coordinate are valid), and no jumping detected (between a current and a delayed sample). The reliability assessment may be performed by means of several conditions and exceptions, which may involve one or more of the following steps of checking if object is jumping. Checking if errors are singular and can be considered as exceptions (be ignored) during the reliability assessment, updating the status of the flag 234 indicating whether the estimate 224 for x coordinate and the estimate 226 for y coordinate are valid by including the ignored errors, assigning the reliability status, and update the reliability status.

According to various embodiments, it may be determined whether the object is jumping based on a distance between estimated X or Y positions (vector 712, which includes estimate 224 for x coordinate from stage 2 and estimate 226 for x coordinate from stage 2) calculated for a current and one previous signal sample. The positive status of a flag of jump detection may be set if either X distance or Y distance exceeds a predefined parameter value (for example being a threshold of a maximum possible distance acceptable between two samples, calculated with taking the sampling period into account). An additional condition may be that the jumping status is not set positive if the flag 234 indicating whether the estimate 224 for x coordinate and the estimate 226 for y coordinate are valid is negative for a previous sample (for example a distance calculated based on measurement with wrong estimation status cannot be taken into consideration in the object jumping assessment).

According to various embodiments, it may be checked whether errors are singular and can be considered as exceptions (be "ignored") during the reliability assessment. This check may be performed separately for two considered errors: negative status of the flag 234 indicating whether the estimate 224 for x coordinate and the estimate 226 for y coordinate are valid and positive status of object jumping (which may be referred to as the flag of jump detection). It may be determined whether the analyzed error can be ignored in the next steps, for example during the reliability assessment. Ignoring may take place when the error occurs after a predefined period of time with results without any errors (ignoring may then be activated for signal samples during a single algorithm triggering). If ignoring occurs, again the next results without any errors may be cumulated in time to allow ignoring again. The errors to be ignored may be assigned using two flags: a flag to ignore negative status of the flag 234 indicating whether the estimate 224 for x coordinate and the estimate 226 for y coordinate are valid and a flag to ignore positive status of the flag of jump detection.

According to various embodiments, the status of the flag 234 indicating whether the estimate 224 for x coordinate and the estimate 226 for y coordinate are valid may be updated by including the ignored errors. This update may be carried out by performing logical operations to create a status of updated flag indicating whether the estimate 224 for x coordinate and the estimate 226 for y coordinate are valid, based on which the reliability may be assessed in the next step. The status may be set positive for: ignored errors and valid result (based on the flag 234 indicating whether the estimate 224 for x coordinate and the estimate 226 for y coordinate are valid, but excluding unignored object jumping).

According to various embodiments, the reliability status may be assigned. Reliability of the result may be positive when several previous positioning results (within a predefined period of time) were without unignorable errors (positive status of updated flag indicating whether the estimate 224 for x coordinate and the estimate 226 for y coordinate are valid). After fulfillment of this condition the trust is gained and status 808 indicating reliability of the vector with estimates 712 is set to 2 (reliable result); then, when unignorable error (negative status of updated flag indicating whether the estimate 224 for x coordinate and the estimate 226 for y coordinate are valid) occurs: reliability may be set to 1 (unreliable result but hold on the history of the X-Y position for a predefined short time period). Reliability may be set to 0 after this time period. In parallel, samples with positive status of the updated flag indicating whether the estimate 224 for x coordinate and the estimate 226 for y coordinate are valid may be added up and possibility to gain trust (and set status 2 again) may be checked all the time.

According to various embodiments, the reliability status may be updated. The status 808 indicating reliability of the vector with estimates 712 may be updated in order to eliminate undesirable situations left after ignoring errors. In the case of occurrence of an ignored error (negative flag 234 indicating whether the estimate 224 for x coordinate and the estimate 226 for y coordinate are valid or detected object jumping, i.e. positive flag of jump detection), the reliability status may be changed to either '1' (hold on the last position instead of returning the calculated position with error) or '0' (if previous position should not be held on due to lack of reliable position in a short-time history). This step may be achieved by changing the status of ignored errors to '1' only in two situations - for sample:
- with input status 808 indicating reliability of the vector with estimates 712 equal to '1', or
- with input status 808 indicating reliability of the vector with estimates 712 equal to '2' AND status for previous sample '2'.

For all other situations not described above, the status may be set to '0' and waiting for first reliable result with status '2' may be turned on.

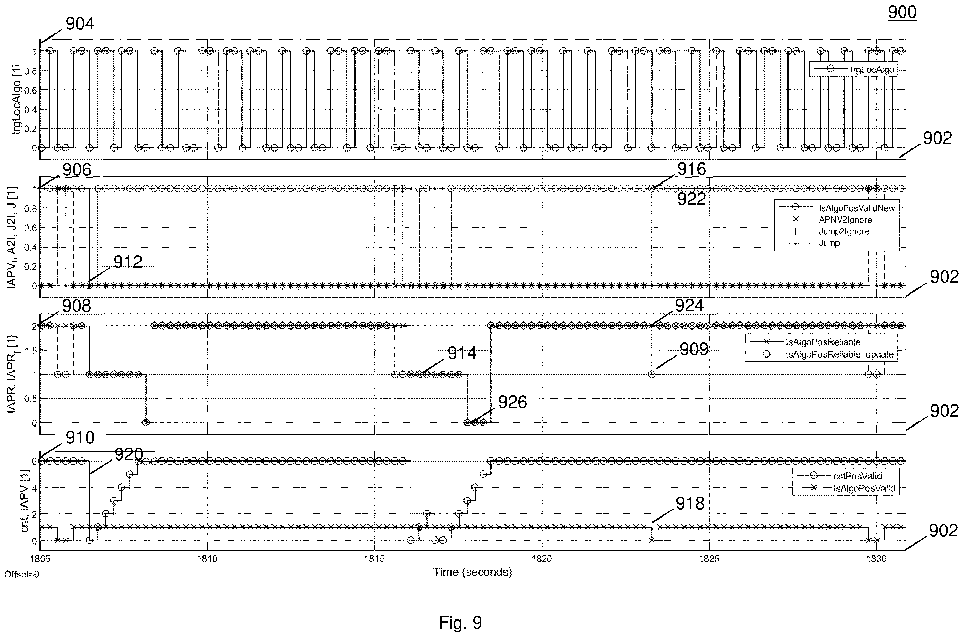

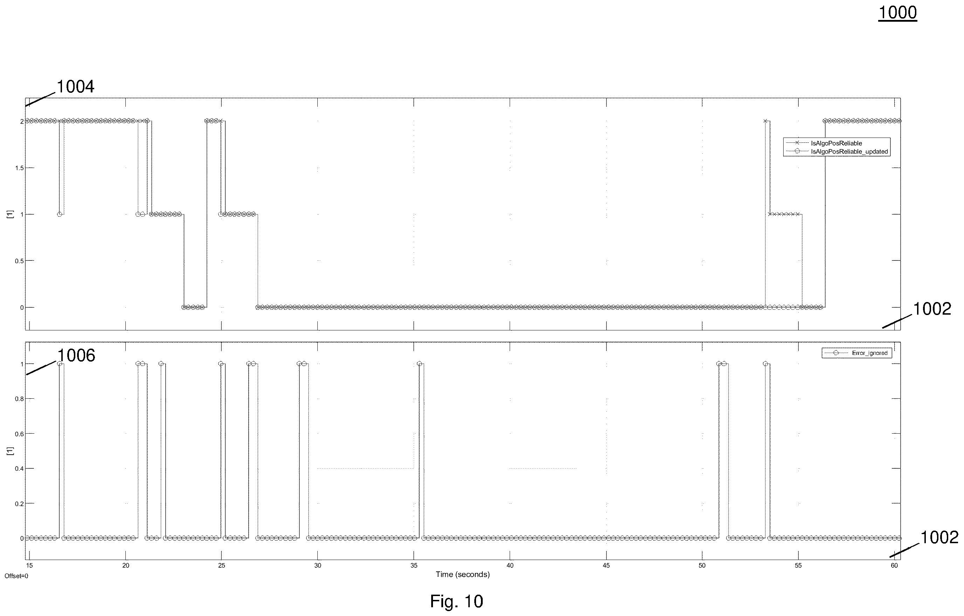

Fig. 9 shows an illustration 900 of determination of the reliability status. Horizontal axes 902 denote time in seconds, and a vertical axis 904 denotes the flag 216 (which is denoted trgLocAlgo in Fig. 9) indicating whether the localization algorithm is to be triggered, a vertical axis 906 denotes IAPV_{f} (IsAlgoPosValidNew, which is the updated flag indicating whether the estimate 224 for x coordinate and the estimate 226 for y coordinate are valid), A2I (APNV2lgnore, which is the flag to ignore negative status of the flag 234), J2I (Jump2Ignore, which is the flag to ignore positive status of the flag of jump detection), J (Jump, which is the flag of jump detection), a vertical axis 908 denotes status 808 indicating reliability of the vector with estimates 712 (which is denoted IsAlgoPosReliable in Fig. 9 and Fig. 10), IAPR_{f} (IsAlgoPosReliable_update, which is the updated status indicating reliability of the vector with estimates 712), and a vertical axis 910 denotes cnt (cntPosValid, which is a number of last valid estimates and/or estimates with ignored errors), the flag 234 (which is denoted IAPV (IsAlgoPosValid in Fig. 9) indicating whether the estimate 224 for x coordinate and the estimate 226 for y coordinate are valid. Fig. 9 shows an example of updating the negative value 918 of the flag 234 indicating whether the estimate 224 for x coordinate and the estimate 226 for y coordinate are valid when positive value 916 of one of ignored errors (APNV2lgnore) occurred, which resulted in positive value 922 of IsAlgoPosValidNew. The ignored error 916 also results in updating the value '2' 924 of IsAlgoPosReliable to value '1' 909 of IsAlgoPosReliable_update. The value 920 of cntPosValid presents a number of last valid estimates and/or estimates with ignored errors (positive IsAlgoPosValidNew) counted incrementally (may be saturated with a minimum needed value as in the presented example) and reset under occurrence of negative value 912 of IsAlgoPosValidNew. The value '1' 914 is assigned to status 808 indicating reliability of the vector with estimates 712 when the trust to the result is lost (too small value of cntPosValis 910) and then value '0' 926 when time elapsed (that allows for holding on the history of position) is reached.

Fig. 10 shows an illustration 1000 of updating of the reliability status based on occurrence of ignored errors. Horizontal axes 1002 denote time in seconds, a vertical axis 1004 denotes status 808 indicating reliability of the vector with estimates 712 and IsAlgoPosReliable_update, and a vertical axis 1006 illustrates a logical value for either positive APNV2lgnore OR Jump2lgnore (which is denoted Error_ignored in Fig. 10).

According to various embodiments, the final estimation status may be updated and the status for the filter may be reset (for example in (sub-)module 804 for assignment of the final estimation status and flag for resetting the LPF filter); in other words, an update of the estimation status and setting a flag 716 indicating whether the LPF filter is to be reset, which will be further used for resetting the filter, may be carried out:
- set the final estimation status by combining the estimation status from the module 206 for stage A (estimation status 230 from stage A) and the reliability status: the final status 240 may be set to '1' (meaning: ignore this result) if the status from the module 206 for stage A indicates incorrect result (estimation status 230 from stage A equal to 1) or if the result is unreliable (status 808 indicating reliability of the vector with estimates 712 equal to 0).
- Flag 716 indicating whether the LPF filter is to be reset at falling edges of the final estimation status 240, i.e. when the result starts to be reliable after unreliable result(s).

According to various embodiments, short-time object jumping may be detected and estimated position may be corrected based on the determined reliability. This may be the last step of the data preparation; this may include two operations:
- detection of short-time object "jumping" - lasting more than within one signal sample, and
- modification of X-Y positions based on the reliability of the estimated position and the result of short-time object jumping detection.

(Sub-)module 806 for correction of the vector with estimates may correct the result (X-Y position) based on the determined status of the reliability of position estimation according to its meaning, namely, the position is left unchanged for status '2' (reliable) or is held on for status '1' or '0' (both are unreliable but the position with the reliability status '0' will be ignored using the final estimation status 240.

Additionally, the (sub-)module 806 for correction of the vector with estimates may check if short-time object jumping occurred. It is calculated similarly as in the first step of the third stage with the difference that the distance between positions (and possible jumping detection) is checked between a current input position (vector 712 which includes estimate 224 for x coordinate from stage 2 and estimate 226 for y coordinate from stage 2) and previous position after correction (a delayed sample of vector 714 with estimates 712 after correction), which allows for the detection of a jump lasting more than within a single algorithm triggering. In the case of detected object jumping, this procedure may be repeated maximally for a predefined time period in order to detect the short-time jumping but to avoid getting stuck in the held position if for some reason it is not the estimation error. The position may be held on during the short-time object jumping only for samples estimated as reliable (if reliability status is '2', for other statuses the jumping detection is not applicable). If the maximum time period of holding is exceeded, the calculated object position is returned.

According to various embodiments, jumping may be checked between current sample and delayed after correction.

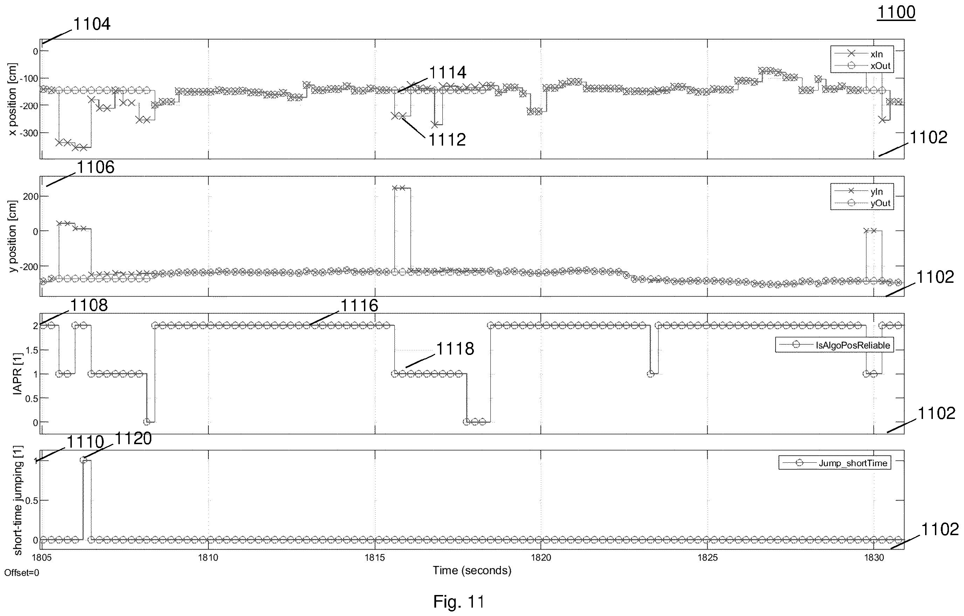

Fig. 11 shows an illustration 1100 of correction of estimated X- and Y- positions based on the reliability status. Horizontal axes 1102 denote time in seconds, a vertical axis 1104 denotes x positions (before correction xln 1112 and after correction xOut 1114), a vertical axis 1106 denotes y positions (before correction yln and after correction yOut), vertical axis 1108 denotes status 808 (denoted IAPR (lsAlgoPosReliable) in Fig. 11) indicating reliability of the vector with estimates 712, and a vertical axis 1110 illustrates (Jump_shortTime, which is a flag of short-time jump detection). Fig. 11 presents an exemplary results of using the reliability status 808 indicating reliability of the vector with estimates 712 according to the meaning. When the reliability status has value '2' (for example 1116), the output xOut and yOut positions are the same as input xln and yln positions. When the reliability status has either value '1' (for example 1118) or value '0' or if short-time object jumping is detected 1120, the xOut and yOut position hold on the previous position.

The module 704 for initial filtration using LPF may carry out initial filtering for Velocity-based filtering. The module 704 for initial filtration using LPF may perform initial filtering of object position from the module 204 for stage 2 after the correction in the previous step: vector 714 with estimates 712 after correction using a Low Pass Filter of the first order with the default value of alpha parameter 710 (which for example may be selected for object during movement, and which may be stored in a memory 708) in order to perform more reliable detection of movement in the next step. A method of determining of this parameter is described in the step of velocity-based filtration below.

The filter may be reset (and may start from current input object position value) using the flag 716 indicating whether the LPF filter is to be reset as input (it may occur at falling edges of the final estimation status 240, i.e. each time when the algorithm starts returning reliable after unreliable result(s)).

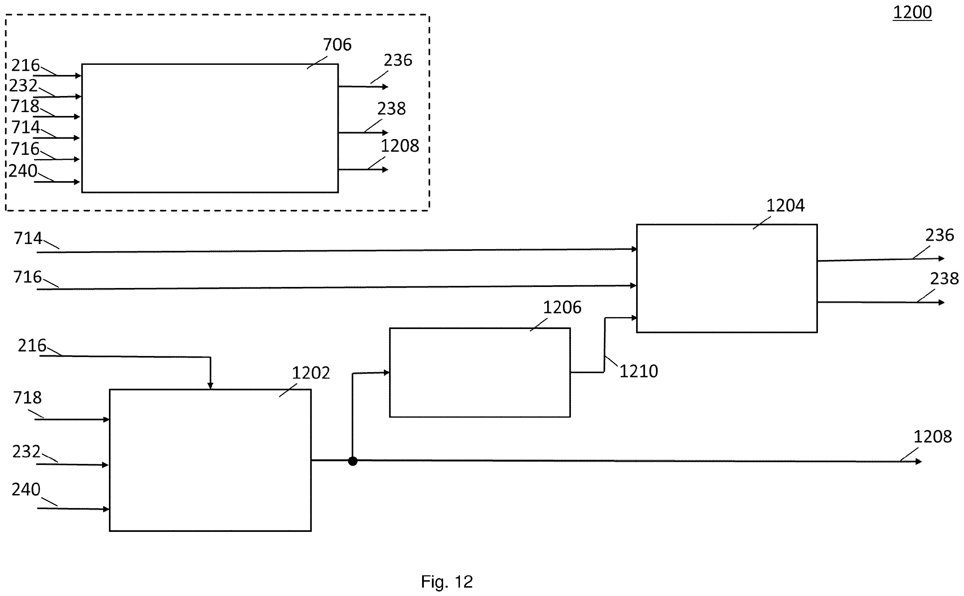

Fig. 12 shows an illustration 1200 of the module 706 for velocity based filtration using LPF. The module 706 for velocity based filtration using LPF may include the following sub-modules:
- module 1202 for movement detection;
- module 1206 for selection of Alpha value for tuned LPF filtration; and
- module 1204 for tuned LPF filtration.

The goal of the third stage may be to filter the object position (x and y values) based on estimated velocity. According to various embodiments, a localization algorithm in a car may be used. In estimating the position, it may be crucial to recognize whether the localized object is inside or outside the car. Therefore, it may be desirable to get a stable position from the localization method. Sensors that measure the distance to an object may be subject to errors. These errors, in turn, may affect that despite the stable position of the object, the method may determine that once the object is inside the car and once outside the car. To avoid such a behavior, a tuned low-pass filter may be provided in the module 1204 for tuned LPF filtration. The filter may shape its characteristics, i.e. the cut-off frequency, depending on the determined velocity of the object. The module 1202 for movement detection may estimate the velocity of the based on the vector 718 with estimates 714 after initial filtering.

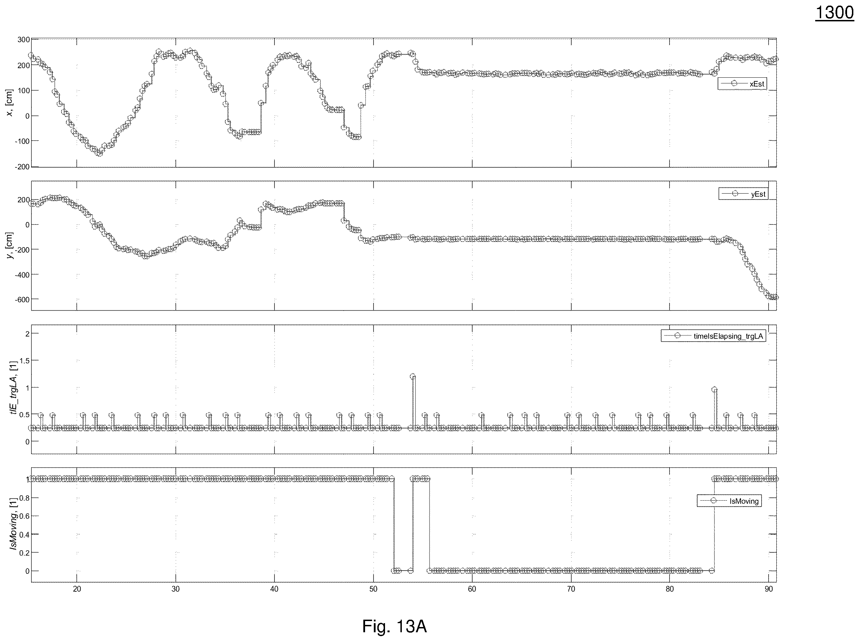

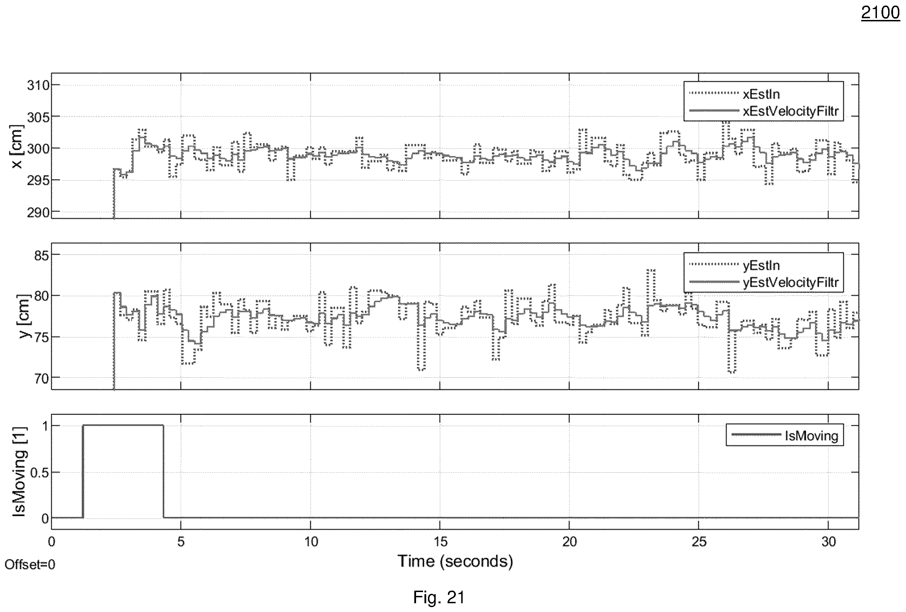

The module 1202 for movement detection may be executed based on a buffer of a current input and a pre-determined number (for example two) delays of the estimated x and y positions (for example initially filtered object positions in the module 704 for initial filtration using LPF, i.e. using the default alpha value), and elapsing time 232 during no triggering of the localization algorithm (for example related to time between estimated object positions). A flag 1208 indicating whether the object is detected to be in movement or not (which may be based on the vector 718 with estimates 714 after initial filtering) may be is assigned to 1 for a weighted mean of calculated object velocities (the greater the signal delay the lower the weight) above 30 cm/sec (for example, this threshold may be selected differently based on an analysis of errors in estimates returned for applied localization algorithm); otherwise the flag 1208 indicating whether the object is detected to be in movement or not may be set to 0. Movement detection may be calculated only for results with proper estimation status (based on the final estimation status 240). Otherwise, the flag 1208 indicating whether the object is detected to be in movement or not may be set to 1 (as a default). Additionally, the movement detection status may be corrected based on its continuity. Since the flag 1208 indicating whether the object is detected to be in movement or not equal to 1 may be the default status and it is needed to be sure when the flag 1208 indicating whether the object is detected to be in movement or not changes to 0, the status may change to 0 when its detection time reaches a predefined (short) period of time. The module 1202 for movement detection may output a final estimate 236 for x coordinate and a final estimate 238 for y coordinate. An exemplary result of movement detection may be presented in illustration 1300 of Fig. 13A. Fig. 13A shows an illustration 1300 of object position x (denoted by xEst in Fig. 13A), y (denoted by yEst in Fig. 13A), time between samples (denoted by timelsElapsing_trgLA in Fig. 13A) and the status of movement detection (denoted by IsMoving in Fig. 13A and Fig. 21).

The filter characteristics (cutting-frequency) may be changed between the two variants:
- first variant occurs when the object is detected to be moving: flag 1208 indicating whether the object is detected to be in movement or not equal to 1, then the cutting-frequency is equal to the alpha value,
- second variant occurs when the object is detected to be at rest: flag 1208 indicating whether the object is detected to be in movement or not equal to 0, then the cutting-frequency is equal to value of alpha parameter of the LPF filter tuned for non-moving object.

The proper value of cutting-frequency (the value 1210 of the alpha parameter of the LPF filter selected based on the flag 1208) is chosen in module 1206 for selection of Alpha value for tuned LPF filtration.

There may be more variants of values to be selected for the alpha parameter based on detection of more than two movement statuses (as presented in the example) determined based on more velocity thresholds or velocity ranges, for example: not moving, moving slowly, moving fast, running, etc.

For the purpose of choosing the appropriate cutoff frequency values, the movement of the object around the car was recorded using a GPS transmitter. Three key cases have been recorded:
- the object is at rest,
- the object is moving at normal velocity (walking),
- the object is running very fast.

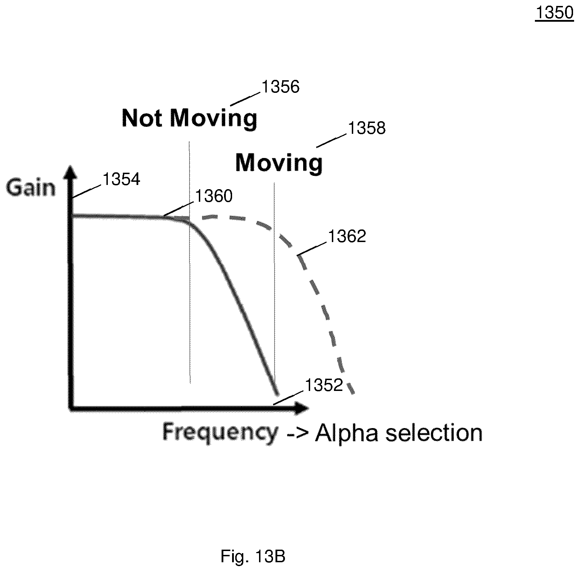

Fig. 13B presents a symbolic representation 1350 of a Bode plot (with a horizontal axis 1352 representing frequency and a vertical axis 1354 representing gain), showing that different cutoff frequencies should be considered when filtering signals of x estimate and y estimate for object which is moving or is not moving. This is connected with the selection of value for Alpha parameter (smoothing constant).

A threshold 1356 for "not moving" (related to a solid line 1360) and a threshold 1358 for "moving" (related to dashed line 1362) are illustrated in Fig. 13B.

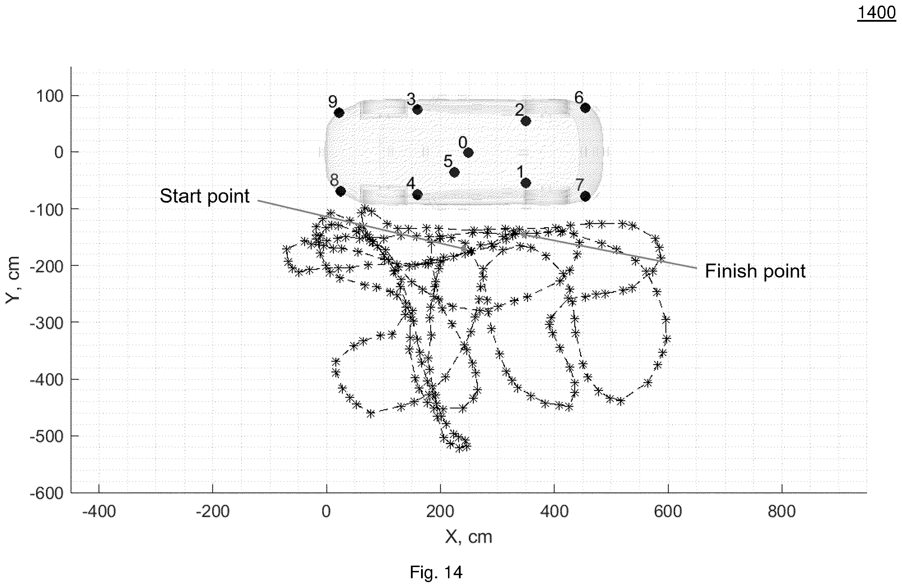

The Alpha values may be selected experimentally based on analysis of measurements performed with GPS reference position (of a real object). The results obtained using the tuned filter are shown in Fig. 14 to Fig. 19.

Fig. 14 shows an illustration 1400 of object position x and y. The scenario illustrated is an object which is walking naturally (illustration based on registered data from GPS reference).

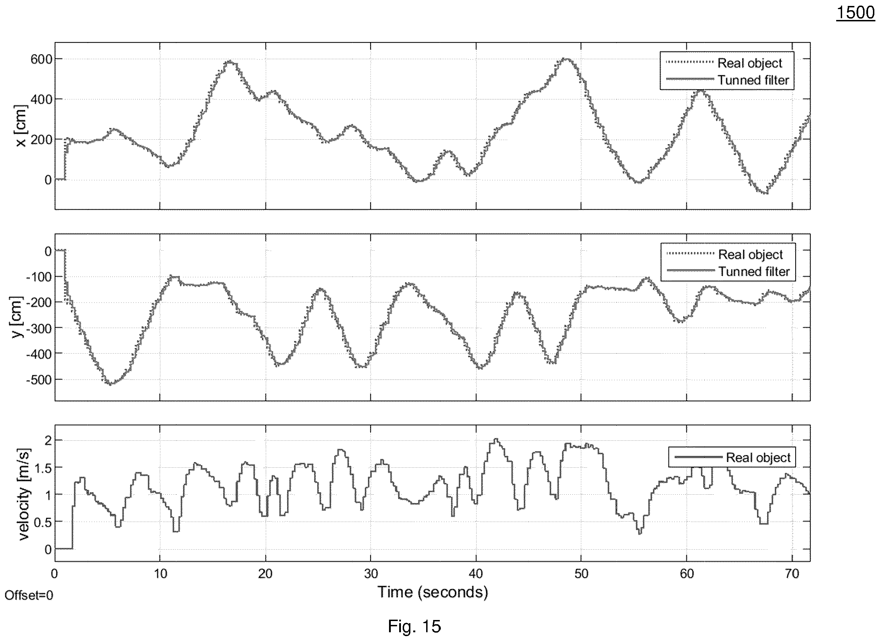

Fig. 15 shows an illustration 1500 of object position x and y and its velocity in time domain. The scenario illustrated is an object which is walking naturally. It will be understood that during normal walk, a maximal velocity may be around 2 m/s.

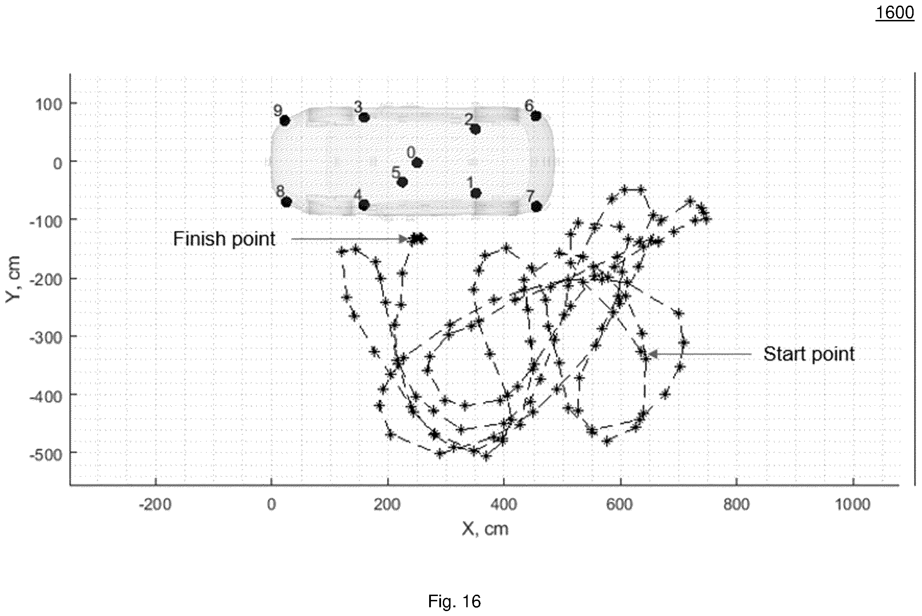

Fig. 16 shows an illustration 1600 of object position x and y. The scenario illustrated is an object which is running.

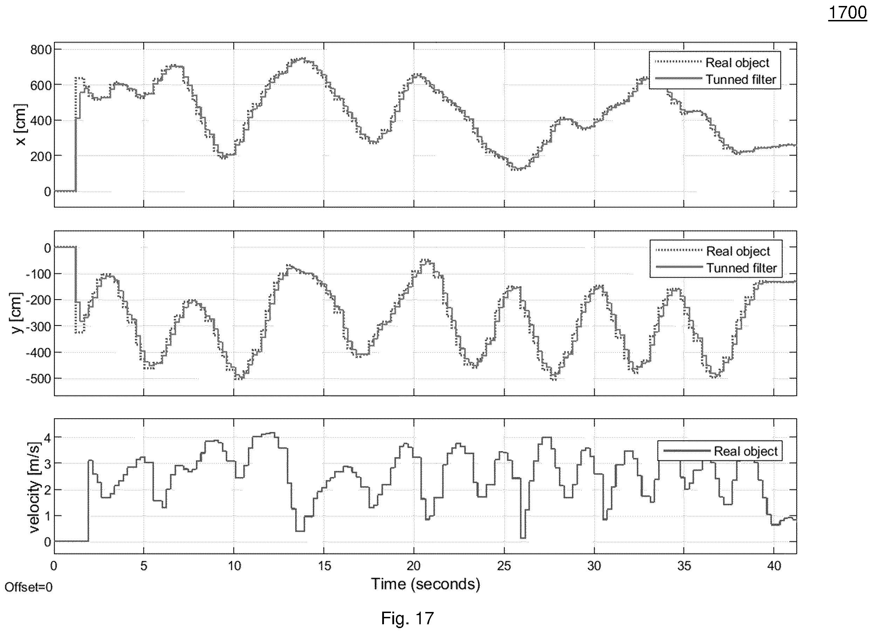

Fig. 17 shows an illustration 1700 of object position x and y and its velocity in time domain. The scenario illustrated is an object which is running. It will be understood that during running, a maximal velocity may reach 4 m/s.

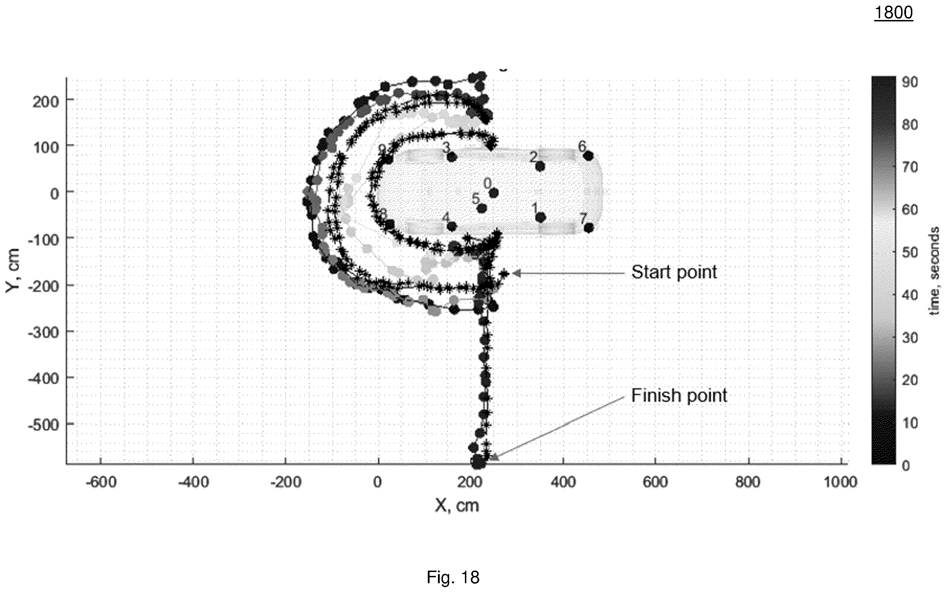

Fig. 18 shows an illustration 1800 of object position x and y. The test scenario illustrated is an object which is walking naturally and not moving. Walking naturally may mean a normal walk of an adult person (for example neither sluggish nor with a hurry). As the experiment revealed, normal walk may be understood as a walk with the velocity of about 1-2 m/s (or less when changing the direction of walking). Not moving may refer to standing in the same position.

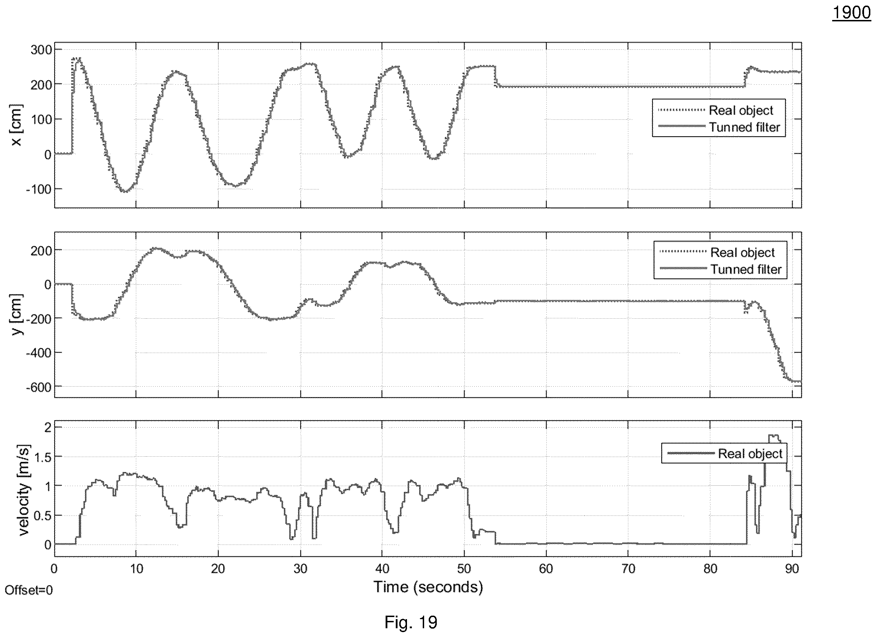

Fig. 19 shows an illustration 1900 of object position x and y and its velocity in time domain. The test scenario illustrated is an object which is walking naturally and not moving.

In Fig. 14 to Fig. 19, the solid lines shows results for the tuned filter and dotted line for the real object.

The results presented in Fig. 15, Fig. 17, and Fig. 19 show that both signals (GPS reference position (Real object) and Tuned filter) are convergent which proves that filter parameters of the tuned LPF filtration (value of alpha parameter of the LPF filter tuned for non-moving object, value of alpha parameter of the LPF filter tuned for moving object) were determined correctly. Based on the characteristics of the low-pass filter, the cutoff frequency parameters may satisfy the following relationship:
value of alpha parameter of the LPF filter tuned for non-moving object < value of alpha parameter of the LPF filter tuned for moving object.

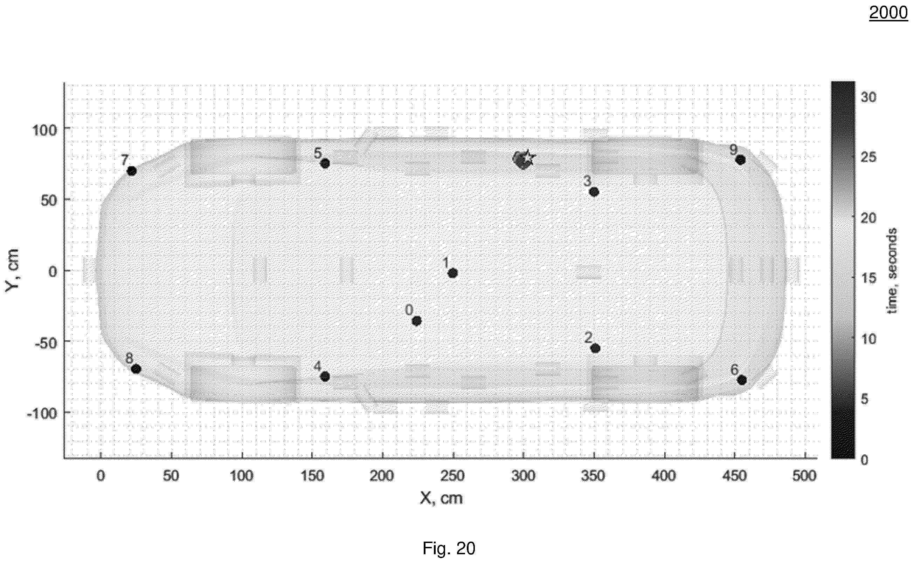

Fig. 20 shows an illustration 2000 of object position x and y, wherein an object is placed at rear door glass on passenger side.

Fig. 21 shows an illustration 2100 of object position x and y and flag 1208 indicating whether the object is detected to be in movement or not in time domain, wherein an object is placed at rear door glass on passenger side.

The comparison between x and y position for system with the module 706 for velocity based filtration using LPF (with filtered x value xEstVelocityFilter and filtered y value yEstVelocityFilter) and without (with unfiltered x value xEstln and unfiltered y value yEstln) is depicted in Fig. 20 and Fig. 21. The results show scenarios when object was placed at rear door glass on a passenger side. The object position x, y is presented at 2D plane in Fig. 20 and its x, y and the flag 1208 indicating whether the object is detected to be in movement or not in time domain in Fig. 21.

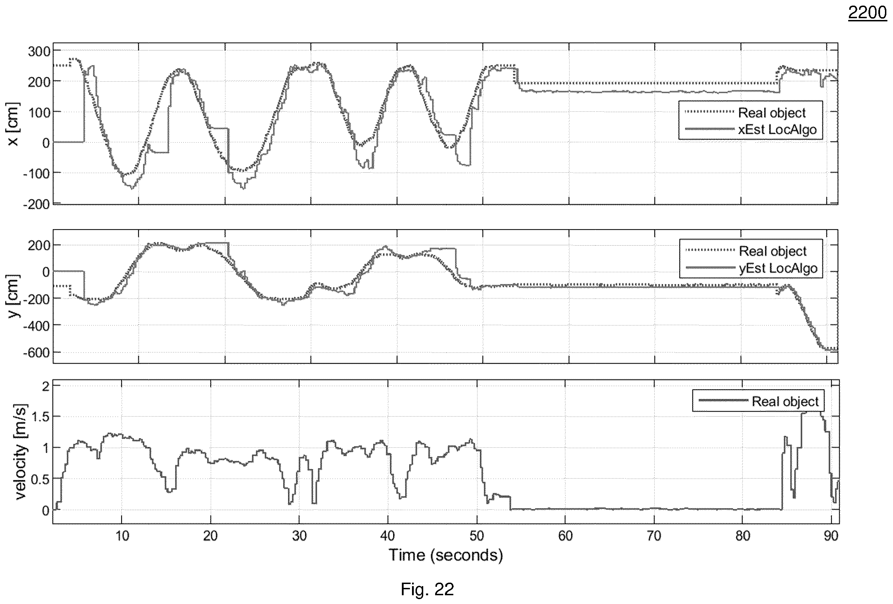

Fig. 22 shows an illustration 2200 of object position x and y and its velocity in time domain, a reference GPS position (denoted by "real object" in Fig. 22) and estimation from LA (wherein the estimation for x is denoted xEst LocAlgo and wherein the estimation for y is denoted yEst LocAlgo in Fig. 22). The test scenario illustrated is an object which is walking naturally and not moving.

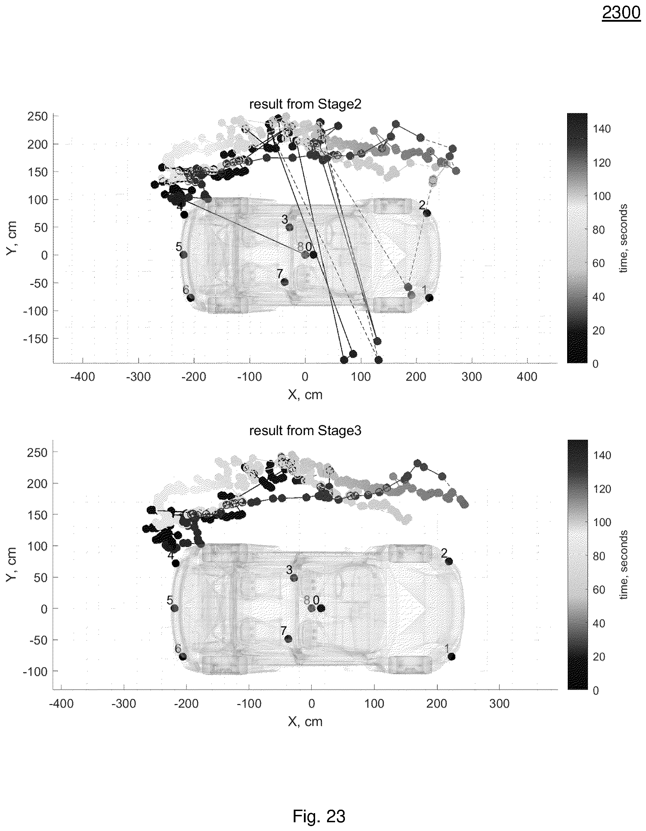

Fig. 23 shows an illustration 2300 of an exemplary result of localization after the module 204 for stage 2 and the module 208 for stage 3, wherein a comparison of exemplary results (walking naturally on the left side of a car) obtained after the module 204 for stage 2 and the module 208 for stage 3 of the algorithm is shown. The effects of lowpass filtration and the elimination of object jumping is well noticeable. Results presented in Fig. 22 and Fig. 23 show the effectiveness of the method according to various embodiments.

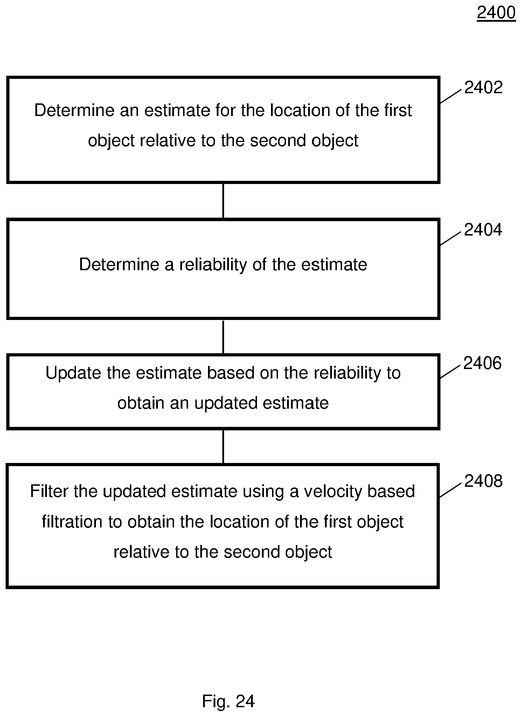

Fig. 24 shows a flow diagram 2400 illustrating a method for determining a location of a first object relative to a second object according to various embodiments. At 2402, an estimate for the location of the first object relative to the second object may be determined. At 2404, a reliability of the estimate may be determined. At 2406, the estimate may be updated based on the reliability to obtain an updated estimate. At 2408, the updated estimate may be filtered using a velocity based filtration to obtain the location of the first object relative to the second object.

According to various embodiments, the method may further include: acquiring signals using sensors; preprocessing the signals; and providing the preprocessed signals as an input for determining the estimate of the location.

According to various embodiments, preprocessing may include or may be determining a validity of the signals.

According to various embodiments, determining a reliability of the estimate may include or may be assigning one of three or more reliability states.

According to various embodiments, determining a reliability of the estimate may include or may be determining a jump between a current and a delayed estimate.

According to various embodiments, determining a reliability of the estimate may include or may be checking if an error is singular.

According to various embodiments, if it is determined that an error is singular, the error may be considered as exception.

According to various embodiments, the velocity based filtration may include or may be movement detection.

According to various embodiments, the velocity based filtration may include or may be determining a parameter for a low pass filter.

According to various embodiments, the velocity based filtration may include or may be applying the low pass filter to the updated estimate.

According to various embodiments, the location of the first object relative to the second object may include or may be a distance and/ or an angle relative to a reference direction.

According to various embodiments, the first object may be a mobile phone or a key and the second object may be a vehicle.

According to various embodiments, the method may further include determining whether to give access to a vehicle based on the location of the first object relative to the second object.

Each of the steps 2402, 2404, 2406, 2408, and the further steps described above may be performed by computer hardware components.

Fig. 2500 shows a computer system 2500 with a plurality of computer hardware components configured to carry out steps of a computer implemented method for determining a location of a first object relative to a second object. The computer system 2500 may include a processor 2502, a memory 2504, and a non-transitory data storage 2506.

The processor 2502 may carry out instructions provided in the memory 2504. The non-transitory data storage 2506 may store a computer program, including the instructions that may be transferred to the memory 2504 and then executed by the processor 2502.

The processor 2502, the memory 2504, and the non-transitory data storage 2506 may be coupled with each other, e.g. via an electrical connection 2508, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 2500.

Various embodiments may be applied to vehicle access, for example to Phone as a Key (PaaK) system.

### Reference numeral list

- 100: illustration of a localization method using ultra-wideband technology
- 102: horizontal axis
- 104: vertical axis
- 106: vehicle
- 108: circle representing potential boundary of location of an object
- 110: reference position

- 150: illustration of a localization method using ultra-wideband
- 152: circle representing potential boundary of location of an object
- 154: circle representing potential boundary of location of an object
- 156: circle representing potential boundary of location of an object

- 200: illustration of a localization algorithm system according to various embodiments

- 202: module for stage 1 of the localization algorithm
- 204: module for stage 2 of the localization algorithm
- 206: module for stage A of the localization algorithm
- 208: module for stage 3 of the localization algorithm
- 210: ranging statuses
- 212: timestamp
- 214: distances
- 216: flag indicating whether the localization algorithm is to be triggered
- 218: ranging statuses
- 222: distances
- 224: estimate for x coordinate from stage 2
- 226: estimate for y coordinate from stage 2
- 228: estimation status from stage 2
- 230: estimation status from stage A
- 232: elapsing time
- 234: flag
- 236: final estimate for x coordinate
- 238: estimate for y coordinate
- 240: final estimation status

- 300: illustration of the module for stage 1
- 302: module for ranging status logical value determination
- 304: module for distance calibration
- 306: module for determination of trigger for localization algorithm

- 400: illustration of the module for stage 2

- 500: illustration of the module for stage A
- 502: module for analysis of time between localization algorithm triggering
- 504: module for assignment of estimation status 230 from stage A
- 506: flag indicating whether the localization algorithm is to be reset
- 508: flag indicating whether the localization algorithm is initiated and waiting

- 600: illustration of calculation of time between algorithm triggering
- 602: horizontal axes
- 604: vertical axis
- 606: vertical axis
- 608: vertical axis
- 610: LA initialization
- 612: lost connection
- 614: no triggering of the localization algorithm
- 616: flag reset
- 618: further lost connection
- 620: increase of elapsing time
- 622: switch to value of 1

- 700: illustration of the module for stage 3
- 702: module for data preparation before filtration
- 704: module for initial filtration using low pass filter
- 706: module for velocity based filtration using low pass filter
- 708: memory
- 710: alpha parameter
- 712: estimates
- 714: estimates
- 716: flag
- 718: vector with estimates

- 800: illustration of the module for data preparation before filtration
- 802: first (sub-)module for assessment of the estimates reliability
- 804: (sub-)module for assignment of the final estimation status and flag for resetting the LPF filter
- 806: (sub-)module for correction of the vector with estimates
- 808: status

- 900: illustration of determination of the reliability status
- 902: horizontal axes
- 904: vertical axis
- 906: vertical axis
- 908: vertical axis
- 909: value '1' of IsAlgoPosReliable_update
- 910: vertical axis
- 912: negative value
- 914: value '1'
- 916: positive value
- 918: negative value
- 920: value of cntPosValid
- 922: positive value
- 924: value '2'
- 926: value '0'

- 1000: illustration of updating of the reliability status based on occurrence of ignored errors
- 1002: horizontal axes
- 1004: vertical axis
- 1006: vertical axis

- 1100: illustration of correction of estimated X- and Y- positions based on reliability status
- 1102: horizontal axes
- 1104: vertical axis
- 1106: vertical axis
- 1108: vertical axis
- 1110: vertical axis
- 1112: x position before correction
- 1114: x position after correction
- 1116: value'2'
- 1118: status '1'
- 1120: short-time object jumping is detected

- 1200: illustration of the module for velocity based filtration using LPF
- 1202: module for movement detection
- 1204: module for tuned LPF filtration
- 1206: module for selection of Alpha value for tuned LPF filtration
- 1208: flag
- 1210: alpha

- 1300: illustration of object position x, y, time between samples and the status of movement detection

- 1350: symbolic representation of a Bode plot
- 1352: horizontal axis
- 1354: vertical axis
- 1356: threshold
- 1358: threshold
- 1360: solid line
- 1362: dashed line

- 1400: illustration of object position x and y

- 1500: illustration of object position x and y and its velocity in time domain

- 1600: illustration of object position x and y

- 1700: illustration of object position x and y and its velocity in time domain

- 1800: illustration of object position x and y

- 1900: illustration of object position x and y and its velocity in time domain

- 2000: illustration of object position x and y

- 2100: an illustration of object position x and y and a flag
- 2200: illustration of object position x and y and its velocity in time domain, a reference GPS position and estimation from localization algorithm

- 2300: illustration of an exemplary result of localization after the module for stage 2 and the module for stage 3

- 2400: flow diagram illustrating a method for determining a location of a first object relative to a second object according to various embodiments
- 2402: step of determining an estimate for the location of the first object relative to the second object
- 2404: step of determining a reliability of the estimate
- 2406: step of updating the estimate based on the reliability to obtain an updated estimate
- 2408: step of filtering the updated estimate using a velocity based filtration to obtain the location of the first object relative to the second object

- 2500: computer system according to various embodiments
- 2502: processor
- 2504: memory
- 2506: non-transitory data storage
- 2508: connection

## Claims

1. Computer implemented method for determining a location of a first object relative to a second object,
the method comprising the following steps carried out by computer hardware components:
- determining (2402) an estimate for the location of the first object relative to the second object;
- determining (2404) a reliability of the estimate;
- updating (2406) the estimate based on the reliability to obtain an updated estimate; and
- filtering (2408) the updated estimate using a velocity based filtration to obtain the location of the first object relative to the second object.

2. The computer implemented method of claim 1, further comprising the following steps carried out by the computer hardware components:
acquiring signals using sensors;
preprocessing the signals;
providing the preprocessed signals as an input for determining the estimate of the location.

3. The computer implemented method of claim 2,
wherein preprocessing comprises determining a validity of the signals.

4. The computer implemented method of at least one of claims 1 to 3,
wherein determining a reliability of the estimate comprises assigning one of at least three reliability states.

5. The computer implemented method of at least one of claims 1 to 4,
wherein determining a reliability of the estimate comprises determining a jump between a current and a delayed estimate.

6. The computer implemented method of at least one of claims 1 to 5,
wherein determining a reliability of the estimate comprises checking if an error is singular.

7. The computer implemented method of claim 6,
wherein, if it is determined that an error is singular, the error is considered as exception.

8. The computer implemented method of at least one of claims 1 to 7,
wherein the velocity based filtration comprises movement detection.

9. The computer implemented method of at least one of claims 1 to 8,
wherein the velocity based filtration comprises determining a parameter for a low pass filter.

10. The computer implemented method of claim 9,
wherein the velocity based filtration comprises applying the low pass filter to the updated estimate.

11. The computer implemented method of at least one of claims 1 to 10,
wherein the location of the first object relative to the second object comprises a distance and/ or an angle relative to a reference direction.

12. The computer implemented method of at least one of claims 1 to 11,
wherein the first object is a mobile phone or a key and the second object is a vehicle.

13. The computer implemented method of at least one of claims 1 to 12, further comprising the following steps carried out by the computer hardware components:
determining whether to give access to a vehicle based on the location of the first object relative to the second object.

14. Computer system (2500), the computer system (2500) being configured to carry out the computer implemented method of at least one of claims 1 to 13.

15. Non-transitory computer readable medium comprising instructions for carrying out the computer implemented method of at least one of claims 1 to 13.
